# EUROPEAN PATENT APPLICATION

(11) **EP 3 885 634 A1**
(43) Date of publication of application: **29.09.2021**
(21) Application number: 19887904.1
(22) Date of filing: 13.11.2019
(51) Int. Cl.: F16M 13/04

(54) **HANDHELD ANTI-SHAKE STABILIZING DEVICE AND SHOOTING STABILIZER**

(30) Priority: 19.11.2018 CN 201821904714 U
(71) Applicant: Winners' Sun Plastic & Electronic (Shenzhen) Co., Ltd., Shenzhen Guangdong 518000 (CN)
(72) Inventor: SHAN, Jinghua, Shenzhen, Guangdong 518000 (CN); PENG, Yi Bing, Shenzhen, Guangdong 518000 (CN)
(74) Representative: Li, Xiaolu
(86) International application number: PCT/CN2019/118222
(87) International publication number: WO 2020/103750

(57) **Abstract**

The present disclosure provides a handheld anti-shake stabilizer and shooting stabilizer. The handheld anti-shake stabilizer includes a bracket, a horizontal balance piece, an upper support piece arranged on an inner top portion of the bracket, and a lower support piece arranged on an inner bottom portion of the bracket. The bracket includes an upper connecting portion and a lower connecting portion. The horizontal balance piece includes a connecting piece and a connecting rod. An upper portion of the connecting piece includes a first groove with an inner wall that is a smooth curved surface. The connecting piece includes a second groove. A lower end of the upper support piece is a spherical surface abutting against the first groove. An upper portion of the lower support piece includes an elastic tapered protrusion configured to abut against a bottom portion of the second groove. Thus, balance stability is adjusted efficiently, a stability performance is improved, and a structure is simple, a volume is small, portability is convenient, and cost is low.

## Description

### TECHNICAL FIELD

The present disclosure relates to a field of shooting stabilizers, in particular to a handheld anti-shake stabilizer and a shooting stabilizer.

### BACKGROUND

Conventional handheld shooting stabilizers adopting the Steadicam principle have a relatively complicated structure, a large volume, are inconvenient to carry, have a high cost, and have a poor stability performance, which cannot meet high image stabilization requirements.

Therefore, the handheld shooting stabilizers in the prior art needs to be improved and developed.

### SUMMARY

In view of the above-mentioned shortcomings in the prior art, a purpose of the present disclosure is to provide a handheld anti-shake stabilizer and a shooting stabilizer, so as to overcome problems of the conventional handheld shooting stabilizer that a structure is complicated and a stability performance is poor.

The technical scheme of the present disclosure is as follows:

The present disclosure provides a handheld anti-shake stabilizer. The handheld anti-shake stabilizer comprises a bracket, a horizontal balance piece, an upper support piece arranged on an inner top portion of the bracket, and a lower support piece arranged on an inner bottom portion of the bracket. An upper connecting portion is arranged on a top portion of the bracket and a lower connecting portion is arranged on a bottom portion of the bracket. The horizontal balance piece comprises a connecting piece arranged in the bracket and a connecting rod connected to the connecting piece and extending to an outside of the bracket. An upper portion of the connecting piece comprises a first groove with an inner wall that is a smooth curved surface. A lower portion of the connecting piece comprises a second groove. A lower end of the upper support piece is a spherical surface. The lower end of the upper support piece abuts against the first groove to fit with the inner wall of the first groove. An upper portion of the lower support piece comprises an elastic tapered protrusion configured to abut against a bottom portion of the second groove.

In one embodiment, the upper support piece comprises a mounting seat mounting on the bracket and an upper abutting rod fixed on the mounting seat. A lower end surface of the upper abutting rod is the spherical surface.

In one embodiment, the lower support piece comprises an elastic lower support cover arranged on the inner bottom portion of the bracket and a lower support rod. The elastic tapered protrusions is arranged on the elastic lower support cover. The lower support rod is configured to supports the elastic lower support cover from a lower end of the elastic lower support cover and makes the elastic tapered protrusions abutting against the second groove.

In one embodiment, an upper portion of the elastic lower support cover comprises a third groove matched with a lower portion of the connecting piece to limit a tilt angle of the connecting piece.

In one embodiment, a lower end of the elastic lower support cover comprises a blind hole. The lower support rod inserts into the blind hole and makes the elastic tapered protrusion abutting against the second groove.

The present disclosure further provides a shooting stabilizer. The shooting stabilizer comprises a clamping device, a vertical handle, a horizontal handle, and the handheld anti-shake stabilizer as described above. The clamping device is arranged on an upper portion of the upper connecting portion. The vertical handle is arranged on a lower portion of the lower connecting portion, and the horizontal handle is arranged on the connecting rod.

In one embodiment, the horizontal handle is hinged on one end of the connecting rod.

In one embodiment, an elastic self-locking structure is arranged between the connecting rod and the horizontal handle. The elastic self-locking structure is configured to automatically lock and fix the horizontal handle when the horizontal handle is unfolded or folded.

In one embodiment, the elastic self-locking structure comprises a receiving groove arranged on a hinged end of the horizontal handle, a support rod arranged in the receiving groove, an elastic piece pressed against the support rod to provide elastic force, and a plurality of limiting grooves arranged on the hinged end of the connecting rod. One end of the support rod extends out of the receiving groove. The limiting grooves match the support rod.

In one embodiment, two limiting grooves are respectively arranged at a front end and a lower end of the hinged end of the connecting rod.

In one embodiment, the shooting stabilizer further comprises a remote control detachable arranged on the horizontal handle.

In one embodiment, the remote control is self-locked on the horizontal handle through a first magnetic attraction assembly arranged inside the remote control and the horizontal handle.

In one embodiment, the first magnetic attraction assembly comprises a first magnet arranged inside the horizontal handle and a second magnet arranged inside the remote control.

In one embodiment, when the horizontal handle is folded, the horizontal handle is self-locked on the vertical handle through a second magnetic attraction assembly arranged inside the horizontal handle and the vertical handle.

In one embodiment, the second magnetic attraction assembly comprises a third magnet arranged inside the vertical handle and a fourth magnet arranged inside the horizontal handle.

In one embodiment, the vertical handle comprises a socket portion and a cylindrical handle body. The cylindrical handle body is equally divided into a plurality of arc-shaped handle portions. A handle body connecting piece is fixedly arranged on one end of the socket portion. The arc-shaped handle portions are hinged to the handle body connecting piece.

In one embodiment, the third magnet is arranged on the socket portion.

In one embodiment, the shooting stabilizer further comprises a telescopic rod. The vertical handle is of a hollow structure and is sleeved on the telescopic rod. The clamping device is rotatably connected to a top portion of the telescopic rod.

In the present disclosure of the handheld anti-shake stabilizer, the spherical surface on the lower end of the upper support piece abuts against the first groove with the smooth curved surface arranged on upper portion of the connecting portion, while the elastic tapered protrusion on the upper portion of the lower support piece abuts against the second groove on the lower portion of the connecting piece, so that balance stability is adjusted efficiently, a stability performance is improved, and a structure is simple, a volume is small, portability is convenient, and cost is low.

### BRIEF DESCRIPTION OF DRAWINGS

FIG. 1 is a schematic diagram showing an overall structure of a handheld anti-shake stabilizer according to one optional embodiment of the present disclosure.
FIG. 2 is a cross-sectional schematic diagram of the handheld anti-shake stabilizer according to one optional embodiment of the present disclosure.
FIG. 3 is a schematic diagram of a bracket according to one optional embodiment of the present disclosure.
FIG. 4 is a schematic diagram of an upper support piece according to one optional embodiment of the present disclosure.
FIG. 5 is a schematic diagram of a horizontal balance piece according to one optional embodiment of the present disclosure.
FIG. 6 is another schematic diagram of the horizontal balance piece according to one optional embodiment of the present disclosure.
FIG. 7 is a schematic diagram of a lower support piece according to one optional embodiment of the present disclosure.
FIG. 8 is a schematic diagram of a shooting stabilizer shown in a first configuration of use according to one optional embodiment of the present disclosure.
FIG. 9 is a partial cross-sectional schematic diagram of the shooting stabilizer shown in the configuration of use according to one optional embodiment of the present disclosure.
FIG. 10 is a schematic diagram of the shooting stabilizer shown in a folded state according to one optional embodiment of the present disclosure.
FIG. 11 is a schematic diagram of a shooting stabilizer shown in a second configuration of use according to one optional embodiment of the present disclosure.
FIG. 12 is a schematic diagram of a shooting stabilizer shown in a third configuration of use according to one optional embodiment of the present disclosure.

### DETAILED DESCRIPTION

The present disclosure provides a handheld anti-shake stabilizer and a shooting stabilizer. In order to make the objectives, technical solutions, and effects of the present disclosure clear, the present disclosure will be further described in detail below with reference to the accompanying drawings and embodiments. It should be understood that the specific embodiments described here are only used to illustrate the present disclosure, but not to limit the present disclosure.

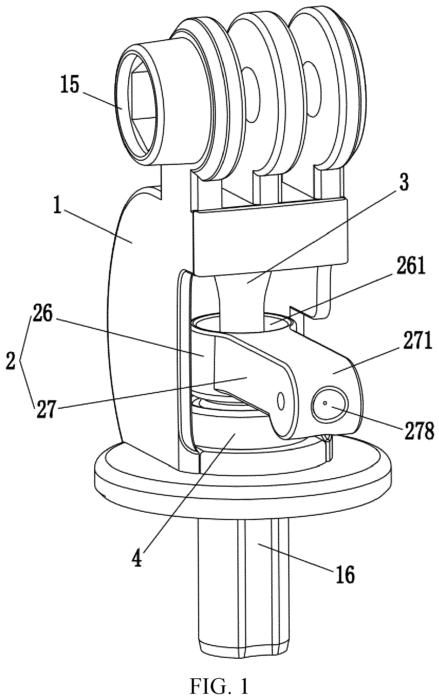

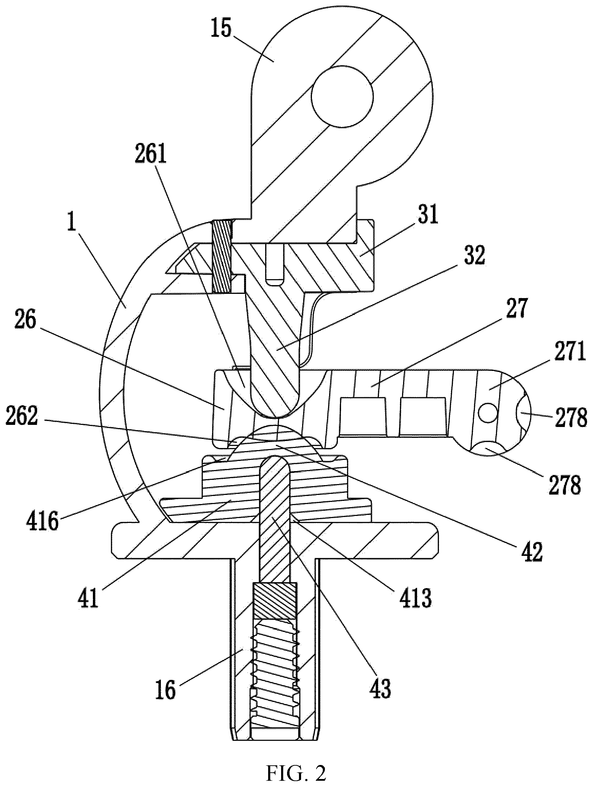

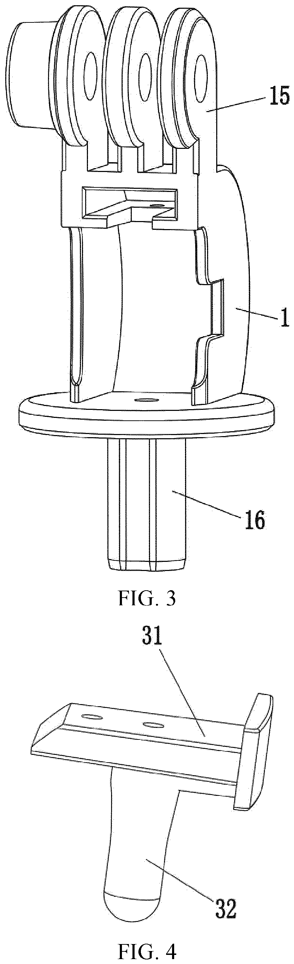

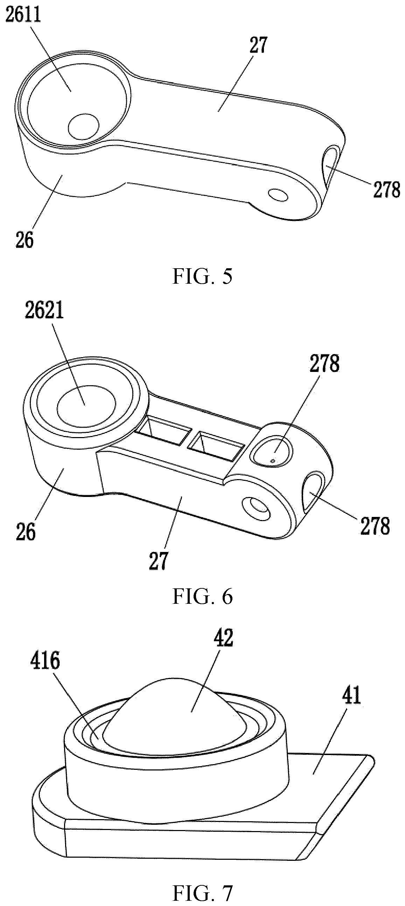

As shown in FIGS. 1-8, the present disclosure provides a handheld anti-shake stabilizer 9 according to one optional embodiment. The handheld anti-shake stabilizer 9 comprises a bracket 1, a horizontal balance piece 2, an upper support piece 3 arranged on an inner top portion of the bracket 1, and a lower support piece 4 arranged on an inner bottom portion of the bracket 1. At least one side of the bracket 1 is open. There is an activity space in the middle of the bracket 1. An upper connecting portion 15 is arranged on a top portion of the bracket 1 and a lower connecting portion 16 is arranged on a bottom portion of the bracket. The horizontal balance piece 2 comprises a connecting piece 26 arranged in the bracket 1 and a connecting rod 27 connected to the connecting piece 26 and extending to an outside of the bracket 1. An upper portion of the connecting piece 26 comprises a first groove 261 with inner wall that is a smooth curved surface. A lower portion of the connecting piece 26comprises a second groove 262. A lower end of the upper support piece 3 is a spherical surface. The spherical surface abuts against the first groove 261 to fit with the inner wall 2611 of the first groove 261. An upper portion of the lower support piece 4 comprises an elastic tapered protrusion 42 configured to abut against a bottom portion 2621 of the second groove 262.

In the present disclosure of the handheld anti-shake stabilizer, the spherical surface on the lower end of the upper support piece abuts against the first groove with the inner wall that is a smooth curved surface and arranged on upper portion of the connecting portion, while the elastic tapered protrusion on the upper portion of the lower support piece abuts against the second groove on the lower portion of the connecting piece, so that balance stability is adjusted efficiently, a stability performance is improved, and a structure is simple, a volume is small, portability is convenient, and cost is low.

Furthermore, as shown in FIGS. 1-7, in the embodiment, the upper support piece comprises a mounting seat 31 mounting on the bracket 1 and an upper abutting rod 32 fixed on the mounting seat 32. A lower end surface of the upper abutting rod 32 is the spherical surface. The lower support piece 4 comprises an elastic lower support cover 41 arranged on the inner bottom portion of the bracket 1 and a lower support rod 43. The elastic tapered protrusions 42 is arranged on the elastic lower support cover 41. The lower support rod 43 is configured to supports the elastic lower support cover 41 from a lower end of the elastic lower support cover 41 and makes the elastic tapered protrusions 42 abutting against the second groove 262. Specifically, a lower end of the elastic lower support cover 41 comprises a blind hole 413. The lower support rod 43 inserts into the blind hole 413 and makes the elastic tapered protrusion 42 abutting against the second groove 262. A top end of the blind hole 413 and a top end of the lower support rod 43 are optionally spherical surface. Optionally, an upper portion of the elastic lower support cover 41 comprises a third groove416 matched with a lower portion of the connecting piece 26 to limit a tilt angle of the connecting piece 26. The third groove 416 is optionally a cylindrical groove.

It should be noted that the spherical surface mentioned in the present disclosure includes but is not limited to a spherical surface in a strict geometric sense, and also includes a surface shape close to or similar to a spherical surface.

Furthermore, in the embodiment, the inner wall 2611 of the first groove 261 is optionally a parabolic smooth curved surface, which effectively prevents the upper support piece 3 from swinging excessively, and controls the lower end of the upper support piece 3 to swing in a small angle in the first groove 261. The small angle ranges, for example, within 20∼30 degrees, which is conducive to adjusting balance. The surface of the elastic tapered protrusion 42 is optionally a smooth arc-shaped curved surface. For example, the elastic tapered protrusion 42 may be a conical protrusion or a mountain-shaped protrusion, and the second groove 262 is optionally a cylindrical groove, which is beneficial for controlling the elastic tapered protrusion 42 to be arranged in a center portion to prevent deviation. The connecting piece 26 is optionally made of hard plastic, such as engineering plastics, polyformaldehyde, etc. The elastic lower support cover 41 is optionally made of silicone material, so that when the elastic tapered protrusion 42 rotates in the second groove 262, it plays a good buffering effect, so that rotation stability is good.

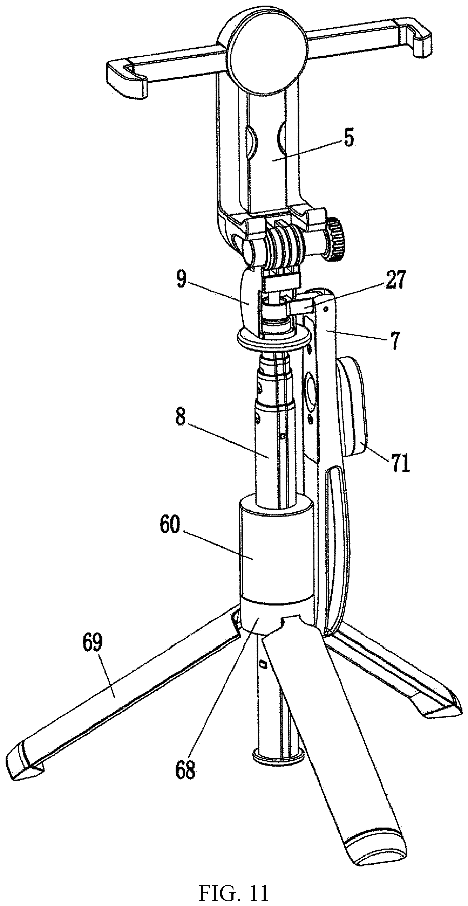

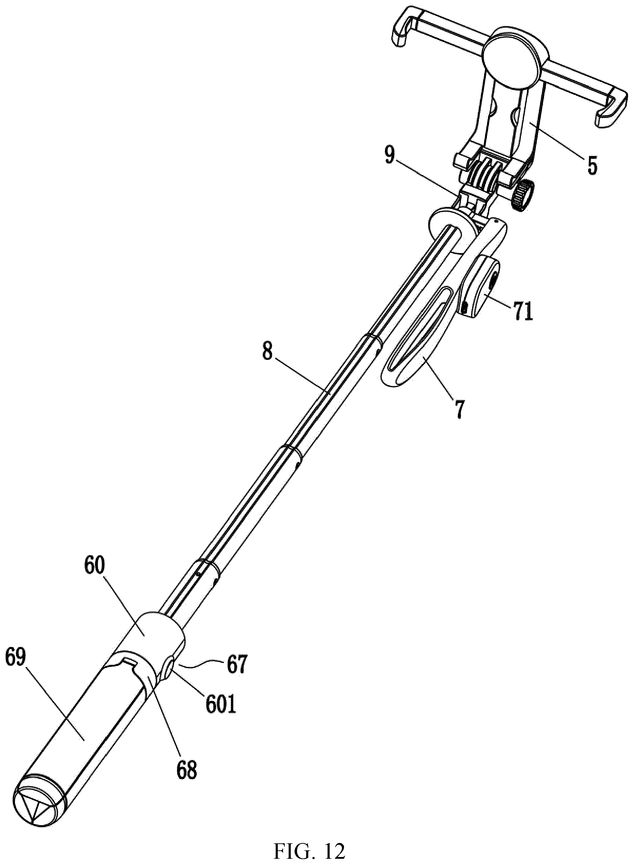

Furthermore, the present disclosure further provides a shooting stabilizer. As shown in FIGS. 1-3 and 8-12, the shooting stabilizer comprises a clamping device 5, a vertical handle 6 (large handle), a horizontal handle 7 (small handle0, and the handheld anti-shake stabilizer 9 as described above. The clamping device 5 is arranged on an upper portion of the upper connecting portion 15. The vertical handle 6 is arranged on a lower portion of the lower connecting portion 16, and the horizontal handle 7 is arranged on the connecting rod 27. Optionally, the shooting stabilizer further comprises a telescopic rod 8. The vertical handle 6 is of a hollow structure and is sleeved on the telescopic rod 8. The clamping device 5 is rotatably connected to a top portion of the telescopic rod 8. A longitudinal length of the shooting stabilizer is adjusted by the telescopic rod 8 to further facilitate control of balance and stability.

Furthermore, as shown in FIGS, 1, 2, 5, 6, and 8-12, in the embodiment, the horizontal handle 7 is hinged on one end of the connecting rod 27. An elastic self-locking structure 79 is arranged between the connecting rod 27 and the horizontal handle 7. The elastic self-locking structure 79 is configured to automatically lock and fix the horizontal handle 7 when the horizontal handle 7 is unfolded or folded. Specifically, the elastic self-locking structure 79 comprises a receiving groove 77 arranged on a hinged end 271 of the horizontal handle 7, a support rod 76 arranged in the receiving groove 77, an elastic piece 75 (optionally a spring) pressed against the support rod 76 to provide elastic force, and a plurality of limiting grooves 278 arranged on the hinged end 271 of the connecting rod 27. One end of the support rod 76 extends out of the receiving groove 77. The limiting grooves 278 match the support rod 76. Optionally, two limiting grooves 278 are respectively arranged at a front end and a lower end of the hinged end 271 of the connecting rod 27.

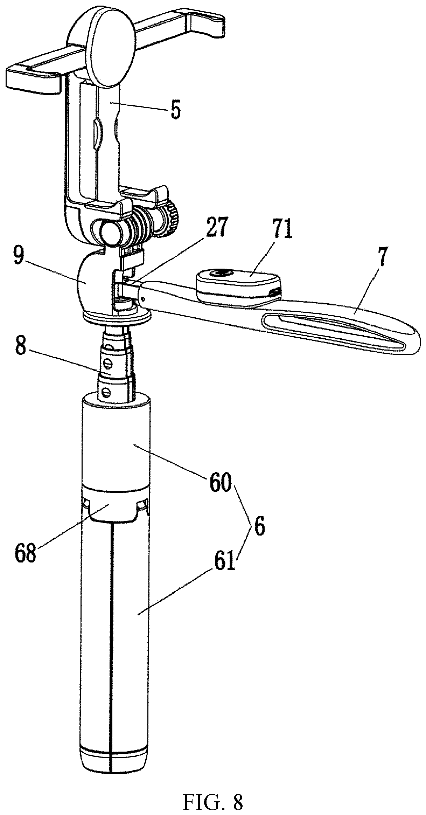

Furthermore, as shown in FIGS. 8-12, in the embodiment, the shooting stabilizer further comprises a remote control 71 detachable arranged on the horizontal handle 7. Optionally, the remote control 71 is self-locked on the horizontal handle 7 through a first magnetic attraction assembly 72 arranged inside the remote control 71 and the horizontal handle 7. The remote control is self-locking by magnets, and the magnetic attraction assembly is able to take many different forms. For example, the magnetic attraction assembly may be a combination of a magnet and iron, cobalt, or nickel metal parts. Of course, the first magnetic attraction assembly 72 comprises a first magnet 701 arranged inside the horizontal handle 7 and a second magnet 711 arranged inside the remote control 71.

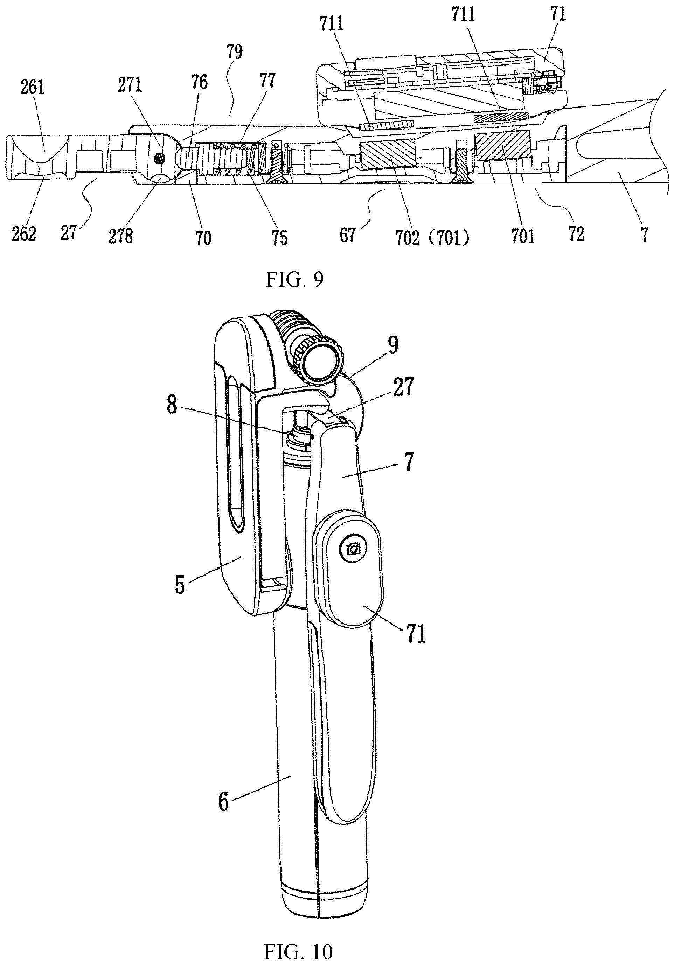

Furthermore, as shown in FIGS. 8-12, when the horizontal handle 7 is folded, the horizontal handle is self-locked on the vertical handle 6 through a second magnetic attraction assembly 67 arranged inside the horizontal handle 7 and the vertical handle 6. As a result, the small handle (horizontal handle) is folded and self-locked, and the remote control, the small handle and the large handle are magnetically fixed to each other. Optionally, the second magnetic attraction assembly 67 comprises a third magnet 601 arranged inside the vertical handle 6 and a fourth magnet 702 arranged inside the horizontal handle 7. It is understandable that the first magnetic attraction assembly 72 and the second magnetic attraction assembly 67 can share some components, only if positions of the corresponding magnets to achieve the attraction effect. For example, as shown in FIG. 9, the fourth magnet 702 is also acted as the second magnet 702.

Furthermore, as shown in FIGS. 8, and 10-12, the vertical handle 6 comprises a socket portion 60 and a cylindrical handle body 61. The cylindrical handle body 61 is equally divided into a plurality of arc-shaped handle portions 69. A handle body connecting piece 68 is fixedly arranged on one end of the socket portion 60. The arc-shaped handle portions 69 are hinged to the handle body connecting piece 68. Optionally, the third magnet 601 is arranged on the socket portion 60. The cylindrical handle body 61 and the socket portion 60 are hollow.

It should be understood that the application of the present disclosure is not limited to the above embodiments. For those of ordinary skill in the art, improvements or changes can be made based on the above description, and all these improvements and changes should fall within the protection scope of the appended claims of the present disclosure.

## Claims

1. A handheld anti-shake stabilizer, comprising:
a bracket;
a horizontal balance piece;
an upper support piece arranged on an inner top portion of the bracket; and
a lower support piece arranged on an inner bottom portion of the bracket;
wherein an upper connecting portion is arranged on a top portion of the bracket and a lower connecting portion is arranged on a bottom portion of the bracket; the horizontal balance piece comprises a connecting piece arranged in the bracket and a connecting rod connected to the connecting piece and extending to an outside of the bracket; an upper portion of the connecting piece comprises a first groove; an inner wall of the first groove is a smooth curved surface; a lower portion of the connecting piece comprises a second groove; a lower end of the upper support piece is a spherical surface; the lower end of the upper support piece abuts against the first groove to fit with the inner wall of the first groove; an upper portion of the lower support piece comprises an elastic tapered protrusion configured to abut against a bottom portion of the second groove.

2. The handheld anti-shake stabilizer according to claim 1, wherein the upper support piece comprises a mounting seat mounting on the bracket and an upper abutting rod fixed on the mounting seat; a lower end surface of the upper abutting rod is the spherical surface.

3. The handheld anti-shake stabilizer according to claim 1, wherein the lower support piece comprises an elastic lower support cover arranged on the inner bottom portion of the bracket and a lower support rod; the elastic tapered protrusions is arranged on the elastic lower support cover; the lower support rod is configured to supports the elastic lower support cover from a lower end of the elastic lower support cover and makes the elastic tapered protrusions abutting against the second groove.

4. The handheld anti-shake stabilizer according to claim 3, wherein an upper portion of the elastic lower support cover comprises a third groove matched with a lower portion of the connecting piece to limit a tilt angle of the connecting piece.

5. The handheld anti-shake stabilizer according to claim 3, wherein a lower end of the elastic lower support cover comprises a blind hole; the lower support rod inserts into the blind hole and makes the elastic tapered protrusion abutting against the second groove.

6. A shooting stabilizer, comprising:
a clamping device;
a vertical handle;
a horizontal handle, and
a handheld anti-shake stabilizer according to any claims 1-5,
wherein the clamping device is arranged on an upper portion of the upper connecting portion; the vertical handle is arranged on a lower portion of the lower connecting portion; the horizontal handle is arranged on the connecting rod.

7. The shooting stabilizer according to claim 6, wherein the horizontal handle is hinged on one end of the connecting rod.

8. The shooting stabilizer according to claim 7, wherein an elastic self-locking structure is arranged between the connecting rod and the horizontal handle; the elastic self-locking structure is configured to automatically lock and fix the horizontal handle when the horizontal handle is unfolded or folded.

9. The shooting stabilizer according to claim 8, wherein the elastic self-locking structure comprises a receiving groove arranged on a hinged end of the horizontal handle, a support rod arranged in the receiving groove, an elastic piece pressed against the support rod to provide elastic force, and a plurality of limiting grooves arranged on the hinged end of the connecting rod; one end of the support rod extends out of the receiving groove; the limiting grooves match the support rod.

10. The shooting stabilizer according to claim 9, wherein two limiting grooves are respectively arranged at a front end and a lower end of the hinged end of the connecting rod.

11. The shooting stabilizer according to claim 6, wherein the shooting stabilizer further comprises a remote control detachable arranged on the horizontal handle.

12. The shooting stabilizer according to claim 11, the remote control is self-locked on the horizontal handle through a first magnetic attraction assembly arranged in the remote control and the horizontal handle.

13. The shooting stabilizer according to claim 12, wherein the first magnetic attraction assembly comprises a first magnet arranged inside the horizontal handle and a second magnet arranged inside the remote control.

14. The shooting stabilizer according to claim 6, wherein when the horizontal handle is folded, the horizontal handle is self-locked on the vertical handle through a second magnetic attraction assembly arranged inside the horizontal handle and the vertical handle.

15. The shooting stabilizer according to claim 14, wherein the second magnetic attraction assembly comprises a third magnet arranged inside the vertical handle and a fourth magnet arranged inside the horizontal handle.

16. The shooting stabilizer according to claim 15, wherein the vertical handle comprises a socket portion and a cylindrical handle body; the cylindrical handle body is equally divided into a plurality of arc-shaped handle portions; a handle body connecting piece is fixedly arranged on one end of the socket portion; the arc-shaped handle portions are hinged to the handle body connecting piece.

17. The shooting stabilizer according to claim 16, wherein the third magnet is arranged on the socket portion.

18. The shooting stabilizer according to claim 6, wherein the shooting stabilizer further comprises a telescopic rod; the vertical handle is of a hollow structure and is sleeved on the telescopic rod; the clamping device is rotatably connected to a top portion of the telescopic rod.
